# FASCICULE DE BREVET EUROPEEN

(11) **EP 2 867 115 B1**
(45) Date de publication et mention de la délivrance du brevet: **14.12.2016**
(21) Numéro de dépôt: 13744635.7
(22) Date de dépôt: 26.06.2013
(51) Int. Cl.: B63B 1/10, B63B 1/12, B63B 1/24, F03B 13/16, B63B 35/44, F03B 13/18

(54) **PLATEFORME SEMI-SUBMERSIBLE À AILERON STABILISATEUR, ET CENTRALE HOULOMOTRICE OFFSHORE INTÉGRANT UNE TELLE PLATEFORME**
HALBTAUCHFÄHIGE PLATTFORM MIT EINER STABILISIERENDEN FLOSSE UND OFFSHORE-WELLENKRAFTWERK MIT SOLCH EINER PLATTFORM
SEMI-SUBMERSIBLE PLATFORM WITH A STABILISING FIN, AND OFFSHORE WAVE POWER PLANT INCORPORATING SUCH A PLATFORM

(30) Priorité: 29.06.2012 FR 1256299
(43) Date de publication de la demande: 06.05.2015
(73) Titulaire: Ruiz-Diez, José-Antonio, 76930 Octeville sur Mer (FR)
(72) Inventeur: Ruiz-Diez, José-Antonio, 76930 Octeville sur Mer (FR)
(74) Mandataire: Demulsant, Xavier
(86) Numéro de dépôt international: PCT/FR2013/051491
(87) Numéro de publication internationale: WO 2014/001717

(56) Documents cités:
- EP-A2- 1 060 982
- DE-A1-102010 026 790
- DE-U1- 20 111 441
- GB-A- 438 353
- GB-A- 2 184 402
- JP-A- 55 127 287
- US-A- 3 978 805
- US-A1- 2010 288 178
- US-A1- 2011 174 206
- US-A1- 2012 111 256

## Description

L'invention concerne une plateforme semi-submersible destinée à être installée en mer et y servir d'infrastructure pour une installation flottante.

Une telle plateforme est connue du document US 3 978 805 A.

Une installation flottante, telle qu'une centrale éolienne ou une centrale houlomotrice (c'est-à-dire de production d'énergie à partir de la houle), nécessite que la plateforme qui la supporte soit non seulement rigide, mais également stable, ce qui pose naturellement des difficultés en raison de la houle, qui tend à transmettre à toute structure flottante des mouvements de pivotement alternatifs longitudinal (tangage) et transversal (roulis).

Ces mouvements sont à éviter en raison des effets négatifs qu'ils impliquent pour l'installation : fatigue (et donc usure) des pièces mécaniques, diminution du rendement. Dans le cas d'une éolienne, les mouvements de tangage et de roulis sont néfastes à son bon fonctionnement, car le mât subit alors d'importantes contraintes de flexion, et en outre l'éolienne se trouve fréquemment désaxée par rapport à la direction du vent. De même, dans le cas d'une centrale houlomotrice, un défaut de stabilité de la plateforme entraîne des mouvements inconsidérés des organes moteurs, entraînant une fatigue mécanique et une baisse du rendement productif.

Un premier objectif est de proposer une plateforme semi-submersible offrant une stabilité accrue.

Un deuxième objectif est de proposer une plateforme semi-submersible offrant une rigidité accrue.

Un troisième objectif est de proposer une plateforme semi-submersible présentant une bonne fiabilité, de sorte à minimiser les opérations de maintenance.

Un quatrième objectif est de proposer une centrale houlomotrice semi-submersible présentant un rendement énergétique accru.

Un cinquième objectif est de proposer une centrale houlomotrice semi-submersible présentant un poids réduit au regard de son rendement énergétique.

A cet effet, il est proposé, en premier lieu, une plateforme semi-submersible comprenant :
- au moins deux caissons flottants longitudinaux ayant des parois latérales pleines délimitant un chenal central qui s'étend d'une extrémité de proue à une extrémité de poupe de la plateforme ;
- au moins une poutre accouplant transversalement les caissons ;
- au moins un aileron stabilisateur qui s'étend transversalement en-deçà de bords inférieurs des caissons.

L'aileron stabilisateur, toujours immergé, assure le maintien de l'assiette de la plateforme grâce au poids de la colonne d'eau qui le surmonte, et qui fait office d'amortisseur, notamment pour les mouvements de tangage.

Le caractère plein des parois latérales des caissons permet de canaliser l'eau dans le chenal, et limite les mouvements de roulis.

Diverses caractéristiques supplémentaires peuvent être prévues pour cette plateforme, seules ou en combinaison :
- l'aileron est disposé au voisinage de l'extrémité de poupe des caissons ;
- l'aileron est intégré à une poutre transversale d'accouplement des caissons ;
- la poutre intégrant l'aileron présente en section transversale une forme en U et comprend deux côtés latéraux qui s'étendent à partir des bords inférieurs des caissons dans le prolongement de ceux-ci ;
- au moins deux ailerons stabilisateurs sont prévus : un aileron de proue, au voisinage de l'extrémité de proue, et un aileron de poupe, au voisinage de l'extrémité de poupe.

Il est proposé, en deuxième lieu, une centrale houlomotrice semi-submersible, comprenant une plateforme telle que présentée ci-dessus, en tant qu'infrastructure, et une machine houlomotrice montée sur la plateforme, équipée d'au moins un flotteur disposé dans le chenal et permettant la transformation de l'énergie de la houle en énergie mécanique.

Diverses caractéristiques supplémentaires peuvent être prévues pour cette centrale, seules ou en combinaison :
- le flotteur est solidaire d'un bras articulé monté sur un portique accouplant transversalement les caissons ;
- le bras articulé comprend une bielle montée en rotation sur un axe solidaire du portique, et un levier solidaire du flotteur, articulé par rapport à la bielle ;
- il est prévu un convertisseur d'énergie comprenant au moins un vérin muni d'un piston couplé à la bielle ;
- l'axe de la bielle est monté sur un portique accouplant transversalement les caissons ;
- la machine houlomotrice comprend une rangée transversale de flotteurs disposés côte à côte dans le chenal, chacun solidaire d'un bras articulé monté sur l'un au moins des caissons ;
- il est prévu, en amont du chenal, une ouverture en entonnoir délimitée vers le bas par un pan incliné ;
- le pan incliné s'étend jusqu'au voisinage du flotteur, en amont de celui-ci ;
- l'ouverture est délimitée latéralement par deux faces latérales qui vont se rapprochant dans le sens aval ;
- il est prévu un volet brise-lame articulé sur un bord amont du pan incliné, entre une position abaissée dans laquelle le volet s'étend sensiblement dans le prolongement du pan incliné, et une position relevée dans laquelle le volet forme un angle avec le pan incliné, obturant ainsi l'ouverture ;
- chaque flotteur est muni d'ailettes sur des faces latérales.

D'autres objets et avantages de l'invention apparaîtront à la lumière de la description d'un mode de réalisation, faite ci-après en référence aux dessins annexés dans lesquels :
- la figure 1 est une vue en perspective montrant une plateforme semi-submersible ;
- la figure 2 est une vue de côté montrant la plateforme de la figure 1 en mer ;
- la figure 3 est une vue en perspective montrant une centrale houlomotrice ;
- la figure 4 est une vue schématique montrant un récupérateur d'énergie équipant la centrale de la figure 3 ;
- la figure 5 est une vue de dessus de la centrale de la figure 3 ;
- la figure 6 est une vue en coupe de la centrale de la figure 5, avec en encart un détail sur un volet brise-lame équipant la centrale.

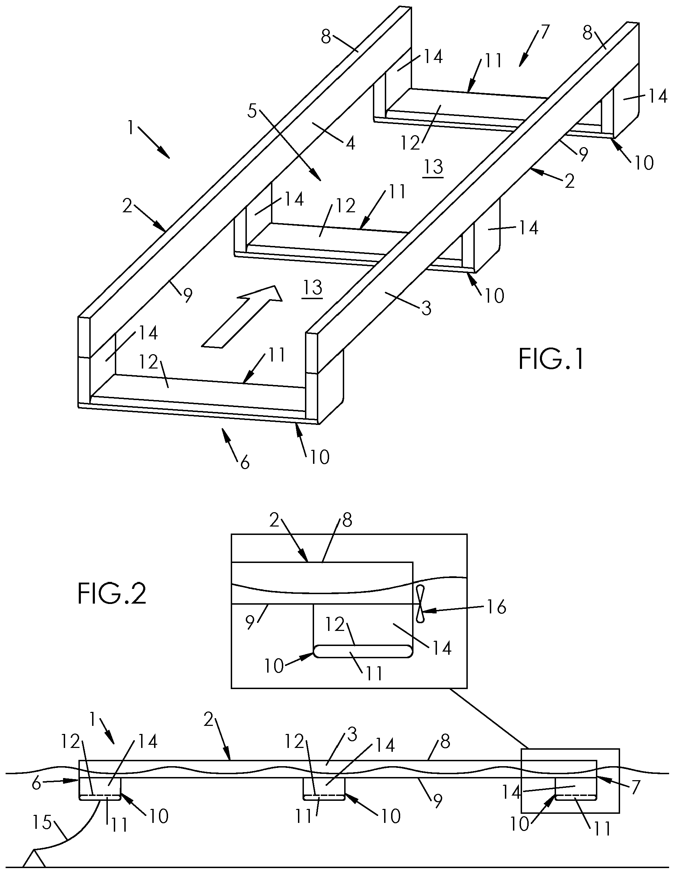

Sur la figure 1 est représentée une plateforme 1 flottante semi-submersible destinée à servir d'infrastructure à une installation offshore, telle qu'une centrale éolienne, équipée d'une ou plusieurs éoliennes, ou encore, comme nous le verrons dans l'exemple présenté ci-après, une centrale houlomotrice. Deux centrales, l'une éolienne, l'autre houlomotrice, peuvent être montées conjointement sur la plateforme 1.

Cette plateforme 1 comprend une pluralité de caissons 2 flottants allongés, disposés sensiblement parallèlement suivant une direction longitudinale qui, lorsque la plateforme 1 est en mer, correspond à la direction principale de propagation de la houle (représentée par la flèche sur la figure 1).

Dans l'exemple illustré, ces caissons **2** sont au nombre de deux et présentent une forme parallélépipédique, à section carrée ou (comme illustré) rectangulaire, d'une hauteur de préférence supérieure à leur épaisseur. Les caissons **2** présentent des parois latérales pleines, à savoir des parois **3** externes et des parois **4** internes, ces dernières définissant conjointement, par paire, un chenal **5** central qui s'étend d'une extrémité **6** de proue à une extrémité **7** de poupe de la plateforme **1.**

Grâce aux parois **3, 4** latérales pleines des caissons **2,** l'eau de mer est canalisée dans le chenal **5** suivant la direction principale de propagation de la houle, ce qui limite les mouvements de roulis de la plateforme **1.**

Les caissons **2** présentent un bord **8** longitudinal supérieur et un bord **9** longitudinal inférieur opposés qui, par mer calme (bien qu'houleuse) à modérément agitée, peuvent être respectivement émergé et immergé.

Chaque caisson **2** est de préférence creux, et réalisé par assemblage de plaques métallique (par exemple en acier traité anticorrosion), en matériau composite ou dans tout autre matériau suffisamment rigide et résistant aux efforts de flexion comme à la corrosion. Chaque caisson **2** peut être raidi au moyen de nervures intérieures, afin de mieux résister aux contraintes de flexion tant dans le plan longitudinal (notamment lorsque le caisson **2** s'étend en porte-à-faux au sommet d'une crête, ou lorsqu'il est porté à ses deux extrémités par deux crêtes successives) que dans le plan transversal (notamment en cas de vortex local).

Chaque caisson **2** peut en outre être compartimenté pour former des ballasts pouvant être au moins partiellement remplis d'eau de mer ou vidangés de sorte à ajuster la ligne de flottaison. Le remplissage et la vidange des ballasts peuvent être réalisés au moyen de pompes, de préférence actionnées de manière automatique.

La plateforme **1** comprend des poutres **10** qui accouplent transversalement les caissons **2** pour maintenir constant l'écartement entre eux et rigidifier la structure. Ces poutres **10** sont en particulier dimensionnées pour résister aux contraintes de flexion engendrées par les efforts transversaux exercés par la pression de l'eau sur les parois **3, 4** latérales des caissons, cette pression pouvant être différente sur la paroi **3** externe et sur la paroi **4** interne, en raison d'une différence du niveau d'eau entre le chenal **5** et l'extérieur de la plateforme **1.**

La plateforme **1** comprend en outre au moins un aileron **11** stabilisateur qui, en mer, est normalement immergé en permanence, cet aileron **11** s'étendant de préférence transversalement en deçà des bords **9** inférieurs des caissons **2.**

Lorsqu'un unique aileron **11** est prévu, il est de préférence disposé au voisinage de la poupe **7.** Toutefois, selon un mode préféré de réalisation illustré sur les figures, la plateforme **1** comprend deux ailerons **11** stabilisateurs, à savoir un aileron **11** de proue disposé à la proue **6,** et un aileron **11** de **poupe** disposé à la poupe **7.**

Les poutres **10** et les ailerons **11** peuvent être dissociés. Ainsi, un aileron pourrait s'étendre à une extrémité de chaque caisson **2.** Toutefois, dans un mode de réalisation préféré, illustré sur les figures, chaque aileron **11** est intégré à une poutre **10** transversale d'accouplement des caissons **2** et s'étend ainsi transversalement d'un caisson **2** à l'autre.

Comme on le voit bien sur la figure 1, chaque aileron **11** présente une face **12** supérieure ou extrados sensiblement plane, parallèle à et en regard des bords **9** longitudinaux inférieurs des caissons **2.**

Les ailerons **11** de proue et de poupe, disposés aux extrémités de la plateforme **1,** ménagent entre eux un espace **13** vide qui met le chenal **5** en communication permanente avec la mer.

Il est également envisageable d'équiper la plateforme **1** d'une poutre **10** intermédiaire, pouvant former un aileron **11** intermédiaire, similaire aux ailerons **11** de proue et de poupe mais situé sensiblement au centre de la plateforme **1,** afin d'accroître encore la stabilité et la rigidité de celle-ci.

Comme illustré sur les figures 1 et 2, chaque poutre **10** intégrant un aileron **11** présente, en section transversale, une forme en U et comprend deux côtés **14** latéraux qui s'étendent à partir des bords **9** inférieurs des caissons **2,** dans le prolongement vertical de ceux-ci, de sorte que l'extrados **12** s'étend à distance des bords **9** inférieurs des caissons **2** afin que l'aileron, situé en contrebas des caissons **2,** soit toujours immergé.

Il en résulte un maintien stable de l'assiette de la plateforme **1** grâce au poids de la colonne d'eau qui surmonte l'aileron **11,** et qui fait office d'amortisseur des mouvements de la plateforme **1,** notamment de tangage. Il va de soi que la présence de deux ailerons **11,** de proue et de poupe, accroît encore la stabilité de la plateforme **1** et notamment sa résistance au tangage.

Comme on le voit sur la figure 2, la plateforme **1** peut être ancrée sur le fond marin au moyen d'une caténaire **15** solidaire de la plateforme **1** (en étant de préférence fixée sur celle-ci à sa proue **6,** par exemple sur l'aileron **11** de proue). Afin de maintenir sensiblement constante l'orientation de la plateforme **1** par rapport à la direction de la houle (dans le cas d'une installation houlomotrice) ou par rapport à la direction du vent (dans le cas d'une installation éolienne), la plateforme **1** peut en outre être équipée d'une turbine **16** de propulsion, montée à la poupe **7,** qui assure ainsi la mise sous tension de la caténaire **15.** Cette caténaire **15** sera de préférence d'une longueur minimum, afin que la caténaire **15** soit tendue et s'étende verticalement, limitant ainsi le débattement de la plateforme **1** autour de son point d'ancrage, au bénéfice d'une meilleure sécurité de la plateforme **1.** Plusieurs points d'ancrage peuvent être prévus.

Ainsi structurée, la plateforme **1** semi-submersible offre une excellente stabilité, grâce notamment aux parois **3, 4** latérales pleines des caissons et à la présence des ailerons **11,** qui agissent à la manière d'amortisseurs.

La rigidité de la plateforme **1** est également importante, les caissons **2** jouant un rôle de longeron et les poutres **10** jouant le rôle de traverses de renfort.

De ce fait, la plateforme **1** présente une bonne fiabilité en raison de la durée de vie accrue de ses composants qui résistent bien à la fatigue. Les opérations de maintenance (consistant notamment à remplacer des pièces d'usure) sont donc minimisées.

Grâce à ces qualités, la plateforme **1** peut servir d'infrastructure à une installation telle qu'une centrale éolienne ou encore une centrale houlomotrice. Les poutres **10** de la plateforme **1** peuvent servir de support à divers composants d'une telle installation (par exemple à un mât d'éolienne).

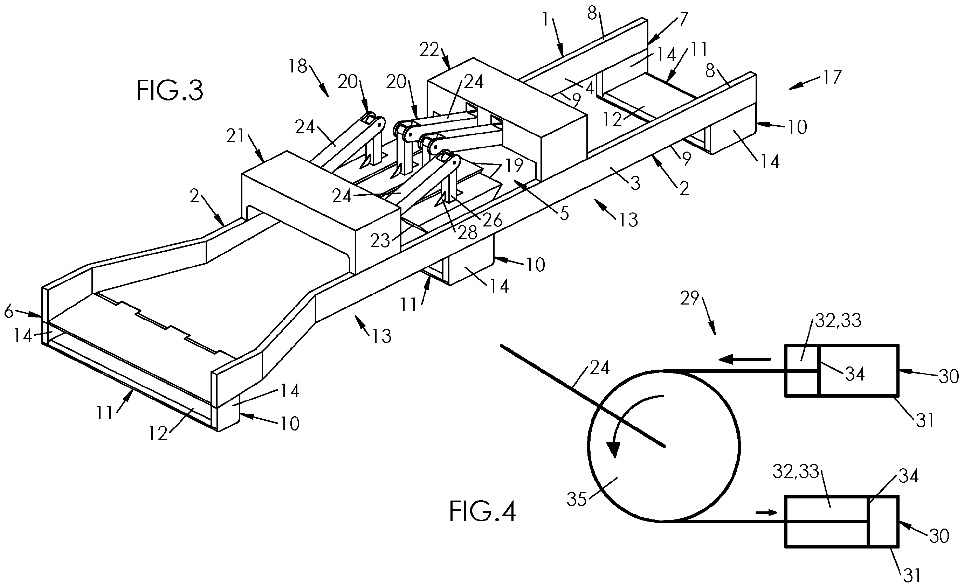

On a représenté sur la figure 3 une centrale **17** houlomotrice flottante semi-submersible qui comprend une machine **18** houlomotrice montée sur une plateforme **1** telle que présentée ci-dessus, la plateforme **1** assurant une fonction d'infrastructure pour cette machine **18.**

La machine **18** houlomotrice est équipée d'au moins un flotteur **19** disposé dans le chenal **5** pour permettre la transformation de l'énergie de la houle en énergie mécanique.

Comme illustré sur les figures 3, 5 et 6, le flotteur **19** est solidaire d'un bras **20** articulé monté sur un portique **21, 22** accouplant transversalement les caissons **2** du côté de leurs bords **8** supérieurs.

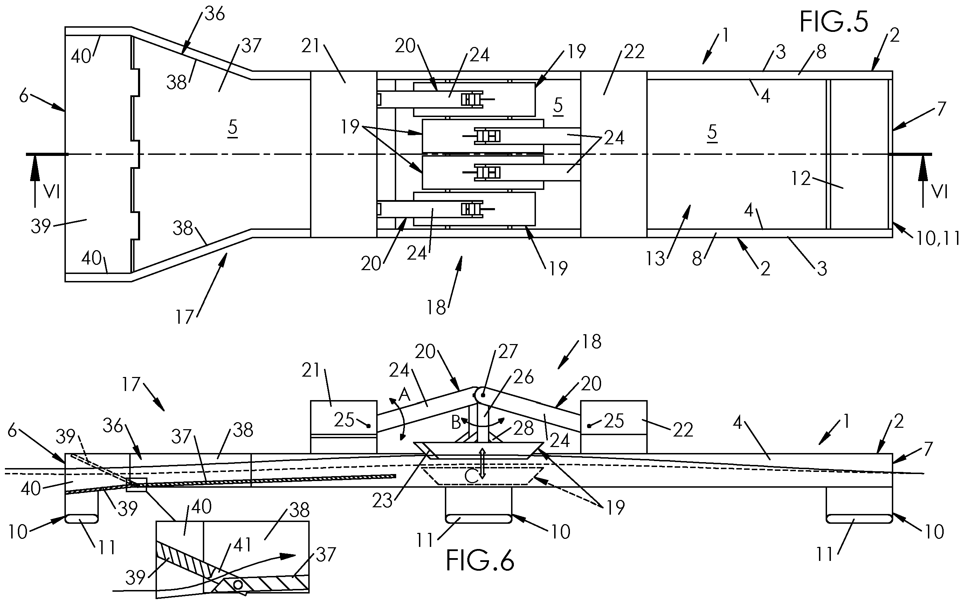

Dans l'exemple illustré, la machine **18** comprend une rangée transversale de flotteurs **19** disposés côte à côte dans le chenal **5.** Dans l'exemple illustré, les flotteurs **19** sont au nombre de quatre, montés par paire sur deux portiques **21, 22** espacés. Comme on le voit bien sur la figure 5, les flotteurs sont groupés en une paire de flotteurs **19** latéraux jouxtant les caissons **2** et montés sur un portique **21** amont, et une paire de flotteurs **19** centraux montées sur un portique **22** aval.

Les efforts générés par les flotteurs **19** au niveau de chaque portique **21, 22** peuvent être équilibrés par un réglage de la résistance à la rotation des articulations, de sorte à minimiser les contraintes s'exerçant sur la plateforme **1.** Toutefois, il peut être intéressant de provoquer un déséquilibre (en réglant différemment les articulations) pour engendrer une résonance dans le mouvement des flotteurs **19** et ainsi maximiser le rendement de la machine **18.**

Chaque flotteur **19** est de préférence profilé et présente à cet effet une étrave **23** orientée vers la proue **6** de la plateforme **1.** Le bras **20** articulé comprend une bielle **24** montée en rotation sur un premier axe **25** solidaire du portique **21, 22,** et un levier **26** solidaire du flotteur **19,** articulé par rapport à la bielle **24** autour d'un deuxième axe **27** de rotation commun. Aux fins de rigidité, la jonction entre le levier **26** et le flotteur **19** peut être étayée au moyen d'équerres **28.**

Les portiques **21, 22** sont de préférence dimensionnés de façon suffisamment généreuse pour former des locaux techniques accueillant et abritant les autres équipements de la centrale **1,** notamment pour la conversion de l'énergie mécanique de la houle en énergie électrique.

La machine **18** comprend en effet, pour chaque flotteur **19,** un convertisseur **29** de l'énergie mécanique du flotteur **19** en énergie hydraulique. Ce convertisseur **29** comprend au moins un vérin **30** comprenant un cylindre **31** définissant une chambre **32** remplie d'un fluide **33** hydraulique et dans lequel est monté coulissant un piston **34** couplé à la bielle **24.** Plus précisément, comme cela est schématiquement représenté sur la figure 4, le piston **34** est accouplé à une roue **35** solidaire de l'axe **25** de rotation de la bielle **24,** de sorte que la rotation de la bielle **24,** provoquée par un mouvement d'ascension ou de descente du flotteur **19** (comme illustré en pointillés sur la figure 6), sollicite alternativement le piston **34** en traction (dans le sens de la grosse flèche droite sur la figure 4) et en compression (dans le sens de la petite flèche droite sur la figure 4) par effet ressort.

Afin de limiter la fatigue des pièces mécaniques, le vérin **30** est de préférence simple effet, étant agencé pour que le fluide **33** ne soit compressé (et injecté dans un circuit fluidique externe relié à des turbines génératrice d'électricité, éventuelle stockée dans des accumulateurs) que lorsque le piston **34** est sollicité en traction. Dans l'exemple illustré, chaque convertisseur **29** comprend deux vérins **30** fonctionnant en opposition (et tous deux en traction), accouplés à la roue **35,** de sorte que chaque oscillation de la bielle **24** (comme indiqué par la flèche A sur la figure 6) exerce alternativement une traction sur chacun des pistons **34,** l'énergie de la houle étant ainsi récupérée tant lors des mouvements d'ascension que de descente du flotteur **19.**

Un convertisseur d'énergie est également, de préférence, monté sur l'axe **27** d'articulation de chaque levier **26** par rapport à la bielle **24** correspondante, de sorte que les mouvements de balancier de chaque flotteur **19** accompagnant la houle (comme indiqué par la flèche B sur la figure 6) de part et d'autre d'une crête sont également convertis en énergie hydraulique (puis électrique).

Grâce à la structure en chenal de la plateforme **1,** la houle est correctement canalisée et l'on évite les mouvements de roulis des flotteurs **19,** au bénéfice du rendement énergétique de la centrale **1.** On notera que la structure ajourée de la plateforme **1** permet d'obtenir un bon rapport poids/puissance.

Ce rendement énergétique peut encore être accru au moyen d'un système de surélévation de la houle dans le chenal **5.**

A cet effet, la plateforme **1** peut être modifiée pour présenter à sa proue une ouverture **36** en entonnoir, délimitée vers le bas par un pan **37** incliné vers le haut de l'amont vers l'aval. Cette inclinaison peut être de l'ordre de quelques degrés, ce qui est suffisant pour ralentir (et donc surélever) localement, jusqu'aux flotteurs **19,** le flux dans le chenal **5.**

Comme on le voit en coupe sur la figure 6, le pan **37** incliné s'étend jusqu'au voisinage des flotteurs **19,** en amont de ceux-ci, pour surélever dans le chenal **5** le niveau d'eau (comme indiqué par la ligne en trait plein) par rapport au niveau d'eau hors de la plateforme (comme indiqué par la ligne en trait pointillé) sans toutefois gêner le mouvement de piston des flotteurs **19,** illustré par la flèche C double sur cette figure.

L'ouverture **36** est également délimitée, latéralement, par des faces **38** latérales qui vont se rapprochant dans le sens aval, pour former une restriction locale de la largeur du chenal **5** à la proue **6,** ce qui accroît encore la surélévation du niveau de l'eau dans le chenal **5** jusqu'aux flotteurs **19.**

L'amplitude de la houle peut encore être accrue localement au niveau des flotteurs **19,** au moyen d'ailettes prévues sur les faces latérales des flotteurs. Ces ailettes, orientées transversalement ou inclinées par rapport à l'horizontale, dévient (et donc ralentissent) le flux, provoquant l'augmentation locale du niveau de l'eau dans le chenal **5.**

Selon un mode de réalisation préféré, illustré sur les figures 3, 5 et 6, la plateforme **1** comprend un mécanisme de protection contre les tempêtes, qui entre en action par mer fortement agitée.

Ce mécanisme comprend un volet **39** brise-lame monté à la proue **6** de la plateforme **1.** Ce volet **39** est articulé sur un bord amont du pan **37** incliné, entre :
- une position abaissée (en trait plein à l'extrémité gauche de la figure 6) dans laquelle le volet **39** s'étend sensiblement dans le prolongement du pan incliné **37,** et
- une position relevée (en pointillés à l'extrémité gauche de la figure 6) dans laquelle le volet **39** forme un angle avec le pan incliné **37.**

Dans la position abaissée, le volet **39** laisse libre le passage pour l'eau vers le chenal **5,** par l'ouverture **36.** Cette position est occupée par le volet **39** en situation normale (mer calme ou modérément agitée). Comme on le voit sur les figures 3 et 5, le volet **39** est encadré de part et d'autre par des sections **40** d'extrémité droites des caissons **2,** qui s'étendent sensiblement parallèlement dans le prolongement des faces **38** latérales.

En position relevée, occupée par le volet **39** en situation de mer fortement agitée, le volet **39** obture l'ouverture **36** pour limiter les mouvements de houle dans le chenal **5** et ainsi éviter les risques d'endommagement de la machine **18** en raison d'une amplitude trop importante du débattement des flotteurs **19.**

Comme on le voit sur la figure 6, le volet **39** peut être relevé jusqu'au bord **8** supérieur des caissons **2,** voire au-delà. Le volet **39** peut être motorisé. Toutefois, selon un mode de réalisation préféré, le volet **39** peut être creux et former lui-même un ballast qui, pour placer le volet **39** en position abaissée, est rempli d'eau de mer et qui, pour placer le volet **39** en position relevée, est vidangé pour permettre ainsi la flottabilité du volet **39** et son relèvement automatique par la mer elle-même. Comme cela est visible dans l'encart de détail de la figure 6, le volet **39** peut présenter des ajours **41** au voisinage de son articulation sur le bord amont du pan **37** incliné, de sorte à former, en position relevée, un passage (de section limitée) pour l'eau de mer (comme indiqué par la flèche dans l'encart de la figure 6) et ainsi limiter les écarts de pression entre le chenal **5** et la mer environnante.

Afin de surélever encore le volet **39** par rapport au niveau de la mer environnante et limiter le risque de déferlement de hautes vagues sur la machine **18,** la plateforme **1** peut être équipée d'un système de réglage de l'assiette de la plateforme **1,** de sorte à surélever la proue **6** par rapport à la poupe **7.**

Ce système peut comprendre un mécanisme de vidange partielle de ballasts intégrés aux caissons **2** du côté de la proue **6,** de sorte à alléger localement (par transfert de masse) les caissons **2** de ce côté et ainsi relever la proue **6** par rapport à la poupe **7.** Ce mécanisme de vidange peut être activé de manière automatique, par exemple au moyen de bouées de détection de l'amplitude de la houle, ou encore à réception d'un signal issu d'un centre de contrôle de la météo marine (et éventuellement relayé par satellite).

## Revendications

1. Plateforme (**1**) semi-submersible, **caractérisée en ce qu'**elle comprend :
- au moins deux caissons (**2**) longitudinaux ayant des parois (**3**, **4**) latérales pleines délimitant un chenal (**5**) central qui s'étend d'une extrémité (**6**) de proue à une extrémité (**7**) de poupe de la plateforme (**1**) ;
- au moins une poutre (**10**) accouplant transversalement les caissons (**2**) ;
- au moins un aileron (**11**) stabilisateur qui s'étend transversalement en-deçà de bords (**9**) inférieurs des caissons (**2**).

2. Plateforme (**1**) selon la revendication **1**, **caractérisée en ce que** l'aileron (**11**) est disposé au voisinage de l'extrémité (**7**) de poupe.

3. Plateforme (**1**) selon la revendication **1** ou la revendication **2**, **caractérisée en ce que** l'aileron (**11**) est intégré à une poutre (**10**) d'accouplement des caissons (**2**).

4. Plateforme (**1**) selon la revendication **3**, **caractérisée en ce que** la poutre (**10**) intégrant l'aileron (**11**) présente en section transversale une forme en U et comprend deux côtés (**14**) latéraux qui s'étendent à partir des bords (**9**) inférieurs des caissons (**2**) dans le prolongement de ceux-ci.

5. Plateforme (**1**) selon l'une des revendications précédentes, **caractérisée en ce qu'**elle comprend au moins deux ailerons (**11**) stabilisateurs, à savoir un aileron (**11**) de proue, au voisinage de l'extrémité (**6**) de proue, et un aileron (**11**) de poupe, au voisinage de l'extrémité (**7**) de poupe.

6. Centrale (**17**) houlomotrice semi-submersible, **caractérisée en ce qu'**elle comprend une plateforme (**1**) selon l'une des revendications précédentes en tant qu'infrastructure, et une machine (**18**) houlomotrice montée sur la plateforme (**1**), équipée d'au moins un flotteur (**19**) disposé dans le chenal (**5**) pour permettre la transformation de l'énergie de la houle en énergie mécanique.

7. Centrale (**17**) selon la revendication **6**, **caractérisée en ce que** le flotteur (**19**) est solidaire d'un bras (**20**) articulé monté sur un portique (**21**, **22**) accouplant transversalement les caissons (**2**).

8. Centrale (**17**) selon la revendication **7, caractérisée en ce que** le bras (**20**) articulé comprend une bielle (**24**) montée en rotation sur un axe (**25**) solidaire du portique (**21**, **22**), et un levier (**26**) solidaire du flotteur (**19**), articulé par rapport à la bielle (**24**).

9. Centrale (**17**) selon la revendication **8, caractérisée en ce qu'**elle comprend un convertisseur (**29**) d'énergie comprenant au moins un vérin (**30**) muni d'un piston (**34**) couplé à la bielle (**24**).

10. Centrale (**17**) selon l'une des revendications **6** à **9, caractérisée en ce que** la machine (**18**) comprend une rangée transversale de flotteurs (**19**) disposés côte à côte dans le chenal (**5**), chacun solidaire d'un bras (**20**) articulé monté sur un portique (**21**, **22**).

11. Centrale (**17**) selon l'une des revendications **6** à **10**, **caractérisée en ce qu'**elle comprend, en amont du chenal (**5**), une ouverture (**36**) en entonnoir délimitée vers le bas par un pan (**37**) incliné.

12. Centrale (**17**) selon la revendication **11**, **caractérisée en ce que** le pan (**37**) incliné s'étend jusqu'au voisinage du flotteur (**19**), en amont de celui-ci.

13. Centrale (**17**) selon la revendication **11** ou la revendication **12**, **caractérisée en ce que** l'ouverture (**36**) est délimitée latéralement par deux (**38**) faces latérales qui vont se rapprochant dans le sens aval.

14. Centrale (**17**) selon l'une des revendications **11** à **13, caractérisée en ce qu'**elle comprend un volet (**39**) brise-lame articulé sur un bord amont du pan (**37**) incliné, entre une position abaissée dans laquelle le volet (**39**) s'étend sensiblement dans le prolongement du pan (**37**) incliné, et une position relevée dans laquelle le volet (**39**) forme un angle avec le pan (**37**) incliné, obturant ainsi l'ouverture (**36**).

15. Centrale (**17**) selon l'une des revendications **6** à **14**, **caractérisé en ce que** chaque flotteur (**19**) est muni d'ailettes sur des faces latérales.

## Patentansprüche

1. Halbtauchfähige Plattform (1), **dadurch gekennzeichnet, dass** sie aufweist:
- wenigstens zwei sich in Längsrichtung erstreckende Schwimmkästen (2) mit geschlossenen Seitenwänden (3, 4), die einen Mittelkanal (5) begrenzen, welcher sich von einem Bugende (6) zu einem Heckende (7) der Plattform (1) erstreckt;
- wenigstens einen Träger (10), der die Schwimmkästen (2) in Querrichtung verbindet;
- wenigstens eine Stabilisatorflosse (11), welche sich unterhalb von unteren Rändern (9) der Schwimmkästen (2) in Querrichtung erstreckt.

2. Plattform (1) nach Anspruch 1, **dadurch gekennzeichnet, dass** die Flosse (11) in der Nähe des Heckendes (7) angeordnet ist.

3. Plattform (1) nach Anspruch 1 oder Anspruch 2, **dadurch gekennzeichnet, dass** die Flosse (11) in einen Träger (10) zur Verbindung der Schwimmkästen (2) integriert ist.

4. Plattform (1) nach Anspruch 3, **dadurch gekennzeichnet, dass** der Träger (10) mit der integrierten Flosse (11) einen U-förmigen Querschnitt aufweist und zwei laterale Seitenteile (14) aufweist, welche sich von den unteren Rändern (9) der Schwimmkästen (2) aus in der Verlängerung derselben erstrecken.

5. Plattform (1) nach einem der vorhergehenden Ansprüche, **dadurch gekennzeichnet, dass** sie wenigstens zwei Stabilisatorflossen (11) aufweist, nämlich eine Bugflosse (11) in der Nähe des Bugendes (6) und eine Heckflosse (11) in der Nähe des Heckendes (7).

6. Halbtauchfähiges Wellenkraftwerk (17), **dadurch gekennzeichnet, dass** es eine Plattform (1) nach einem der vorhergehenden Ansprüche als Unterstützungskonstruktion und eine auf der Plattform (1) angebrachte Wellenenergiemaschine (18) aufweist, die mit wenigstens einem Schwimmkörper (19) ausgestattet ist, der in dem Kanal (5) angeordnet ist, um die Umwandlung der Wellenenergie in mechanische Energie zu ermöglichen.

7. Kraftwerk (17) nach Anspruch 6, **dadurch gekennzeichnet, dass** der Schwimmkörper (19) mit einem Gelenkarm (20) fest verbunden ist, der an einem Portalrahmen (21, 22) angebracht ist, welcher die Schwimmkästen (2) in Querrichtung verbindet.

8. Kraftwerk (17) nach Anspruch 7, **dadurch gekennzeichnet, dass** der Gelenkarm (20) eine Schubstange (24), die drehbar auf einer mit dem Portalrahmen (21, 22) fest verbundenen Achse (25) gelagert ist, und einen mit dem Schwimmkörper (19) fest verbundenen Hebel (26), der mit der Schubstange (24) gelenkig verbunden ist, aufweist.

9. Kraftwerk (17) nach Anspruch 8, **dadurch gekennzeichnet, dass** es einen Energiewandler (29) aufweist, der wenigstens einen Zylinder (30) aufweist, der mit einem Kolben (34) ausgestattet ist, der mit der Schubstange (24) gekoppelt ist.

10. Kraftwerk (17) nach einem der Ansprüche 6 bis 9, **dadurch gekennzeichnet, dass** die Maschine (18) eine quer angeordnete Reihe von Schwimmkörpern (19) aufweist, die nebeneinander in dem Kanal (5) angeordnet sind und jeweils mit einem Gelenkarm (20) fest verbunden sind, der an einem Portalrahmen (21, 22) angebracht ist.

11. Kraftwerk (17) nach einem der Ansprüche 6 bis 10, **dadurch gekennzeichnet, dass** es stromaufwärts des Kanals (5) eine trichterförmige Öffnung (36) aufweist, die von unten durch eine geneigte Fläche (37) begrenzt wird.

12. Kraftwerk (17) nach Anspruch 11, **dadurch gekennzeichnet, dass** sich die geneigte Fläche (37) bis in die Nähe des Schwimmkörpers (19) erstreckt, stromaufwärts desselben.

13. Kraftwerk (17) nach Anspruch 11 oder Anspruch 12, **dadurch gekennzeichnet, dass** die Öffnung (36) seitlich durch zwei Seitenflächen (38) begrenzt ist, die sich in Stromabwärtsrichtung einander annähern.

14. Kraftwerk (17) nach einem der Ansprüche 11 bis 13, **dadurch gekennzeichnet, dass** es eine wellenbrechende Klappe (39) aufweist, die an einem stromaufwärtigen Rand der geneigten Fläche (37) angelenkt ist, zwischen einer abgesenkten Position, in welcher sich die Klappe (39) im Wesentlichen in der Verlängerung der geneigten Fläche (37) erstreckt, und einer angehobenen Position, in welcher die Klappe (39) einen Winkel mit der geneigten Fläche (37) bildet und somit die Öffnung (36) verschließt.

15. Kraftwerk (17) nach einem der Ansprüche 6 bis 14, **dadurch gekennzeichnet, dass** jeder Schwimmkörper (19) mit Flügeln an den Seitenflächen ausgestattet ist.

## Claims

1. Semi-submersible platform (1), **characterized in that** it comprises:
- at least two longitudinal caissons (2) having solid lateral walls (3, 4) delimiting a central channel (5) which extends from a bow end (6) to a stern end (7) of the platform (1);
- at least one beam (10) transversely coupling the caissons (2);
- at least one stabilizing fin (11) which extends transversely below the lower edges (9) of the caissons (2).

2. Platform (1) according to Claim 1, **characterized in that** the fin (11) is positioned near the stern end (7).

3. Platform (1) according to Claim 1 or Claim 2, **characterized in that** the fin (11) is incorporated into a beam (10) that couples the caissons (2).

4. Platform (1) according to Claim 3, **characterized in that** the beam (10) incorporating the fin (11) has, in cross section, a U-shape and comprises two lateral sides (14) extending from the lower edges (9) of the caissons (2) in the continuation thereof.

5. Platform (1) according to one of the preceding claims, **characterized in that** it comprises at least two stabilizing fins (11), namely a bow fin (11) near the bow end (6) and a stern fin (11) near the stern end (7).

6. Semi-submersible wave energy power plant (17), **characterized in that** it comprises a platform (1) according to one of the preceding claims by way of infrastructure, and a wave energy machine (18) mounted on the platform (1), equipped with at least one float (19) placed in the channel (5) so as to allow wave energy to be converted into mechanical energy.

7. Power plant (17) according to Claim 6, **characterized in that** the float (19) is secured to an articulated arm (20) mounted on a portal frame (21, 22) transversely coupling the caissons (2).

8. Power plant (17) according to Claim 7, **characterized in that** the articulated arm (20) comprises a connecting rod (24) mounted to rotate on a pivot pin (25) secured to the portal frame (21, 22), and a lever (26) secured to the float (19), articulated with respect to the connecting rod (24).

9. Power plant (17) according to Claim 8, **characterized in that** it comprises an energy converter (29) comprising at least one jack (30) fitted with a piston (34) coupled to the connecting rod (24).

10. Power plant (17) according to one of Claims 6 to 9, **characterized in that** the machine (18) comprises a transverse row of floats (19) placed side by side in the channel (5), each one secured to an articulated arm (20) mounted on a portal frame (21, 22).

11. Power plant (17) according to one of Claims 6 to 10, **characterized in that** it comprises, upstream of the channel (5), a funnel-shaped opening (36) delimited at the bottom by an inclined plane (37).

12. Power plant (17) according to Claim 11, **characterized in that** the inclined plane (37) extends as far as the vicinity of the float (19), upstream thereof.

13. Power plant (17) according to Claim 11 or Claim 12, **characterized in that** the opening (36) is laterally delimited by two (38) lateral faces which converge towards the downstream direction.

14. Power plant (17) according to one of Claims 11 to 13, **characterized in that** it comprises a breakwater flap (39) articulated to an upstream edge of the inclined plane (37), between a lowered position in which the flap (39) extends substantially in the continuation of the inclined plane (37) and a raised position in which the flap (39) makes an angle with the inclined plane (37), thus blocking off the opening (36).

15. Power plant (17) according to one of Claims 6 to 14, **characterized in that** each float (19) is equipped with fins on the lateral faces.
